# EUROPEAN PATENT SPECIFICATION

(11) **EP 1 457 126 B1**
(45) Date of publication and mention of the grant of the patent: **09.01.2008**
(21) Application number: 04005286.2
(22) Date of filing: 05.03.2004
(51) Int. Cl.: A43B 7/12, A43B 9/02, B29D 31/512

(54) **Method for obtaining a waterproof breathable shoe, and shoe obtained with the method**
Verfahren zur Herstellung eines wasserdichten atmungsaktiven Schuhwerks und durch dieses Verfahren hergestellter Schuh
Procédé de fabrication de chaussure imperméables permettant la transpiration et chaussure obtenue par ce procédé

(30) Priority: 11.03.2003 IT TV20030043
(43) Date of publication of application: 15.09.2004
(73) Proprietor: Jolly Scarpe S.p.A., 31044 Montebelluna (Prov. of Treviso) (IT)
(72) Inventor: Bleimhofer, Walter, 66989 Hoehfroeschen (DE); Schuetzeneder, Thomas, 4284 Tragwein (AT)
(74) Representative: Modiano, Micaela Nadia

(56) References cited:
- EP-A- 0 286 853
- WO-A-02/098255
- DE-C- 19 857 899

## Description

The present invention relates to a method for obtaining a waterproof and breathable shoe and to a shoe thus obtained.

Currently, the problem of manufacturing shoes, particularly trekking shoes, that are waterproof so as to allow the user to wear them even to walk over stretches of damp ground or grassy areas that are still wet following atmospheric precipitations, is strongly felt.

EP-0 298 360 discloses a waterproof shoe that comprises an upper, a strip or band of material suitable to be penetrated, and an applied membrane whose technical characteristic and function is to provide permeability to air but not to water.

In this solution, the lower ends of the upper end at a specific distance from the tip of said strip or band, whose extension affects part of the adjacent membrane.

The upper is then associated, at its lower ends, both with the membrane and with a plastic sole by way of the interposition of the strip or band, which is made of a material that is suitable to be penetrated, during injection, by the plastic material.

Although this solution allows to obtain a waterproof shoe, it has drawbacks during the production step, which entails that once the upper has been formed, the band, in the form of a net, is applied to the upper and to a soft insole.

This coupling occurs by preforming the tip of the upper with a toe forming machine and then performing so-called strobel stitching.

The upper thus prepared is then steamed by an auxiliary boiler in order to allow its subsequent better adaptation to a last.

This step of operation entails the real danger of separation of the net-like band from said additional applied membrane, whose technical characteristic and function is to provide permeability to air but not to water.

The upper is then fitted on a last, and an insole made of plastic material is then applied thereto in order to stiffen the sole.

Finally, the upper is injection-molded in order to obtain the tread sole.

Therefore, in addition to the drawback of the possible separation of the band from the air-permeable but waterproof membrane, there are also production rejects due to the fact that when the operators fit the upper on the last they must be very careful as to the way in which the net-like band is arranged, since failure to match the edge of the last entails an axial offset that is rendered permanent by the subsequent injection-molding.

The difficulty of matching the edge of the last is further worsened by the fact that the strobel stitch applies a curvature to the net-like band.

Moreover, the need to preform the toe with toe forming machines entails additional costs and does not always allow to eliminate creases at the toe.

The aim of the present invention is to solve the drawbacks noted in the cited prior art, by providing a method that allows to achieve, at low costs and with reject reduction, a shoe that has an upper made of leather or fabric that is waterproof and breathable.

Within this aim, an object of the invention is to provide a method that allows to obtain the waterproof shoe regardless of the skill or attention used by an operator in positioning the upper in the various steps of the process.

Another object is to provide a waterproof shoe whose toe is free from creases.

Another object is to provide a method that allows to obtain a shoe that is reliable and safe in use and has low manufacturing costs.

This aim and these and other objects that will become better apparent hereinafter are achieved by a method for obtaining a waterproof and breathable shoe, provided with an upper made of leather or fabric, with a lining that comprises at least one membrane made of a material that provides permeability to air but not to water, and with at least one insole,
characterized in that it comprises, even in a different sequence, the steps of:
-- providing at least one seat starting from the perimetric edge of said at least one waterproofed insole, so as to affect part of its thickness;
-- optionally providing one or more through holes in said at least one insole at said at least one seat;
-- removing by skiving part of the lower perimetric edge of said lining that is adjacent to said at least one seat of said at least one insole;
-- providing a perimetric strobel-stitched seam of the lower end of said upper with said lower skived perimetric edge of said lining and with said at least one inner insole in a region affected by said at least one seat;
-- positioning said upper thus obtained on a last;
-- injection-molding a sole over said upper and forming a channel made of waterproofing plastic material at said at least one seat of said at least one insole.

This method allows to obtain a shoe that is waterproof and breathable and has an upper made of leather or fabric, a lining that comprises at least one membrane made of a material that provides permeability to air but not to water, and at least one insole, characterized in that at least one seat is provided starting from the perimetric edge of said at least one waterproofed insole through part of its thickness, a perimetric strobel-stitched seam being provided at said seat for coupling to the lower end of said upper and to a skived lower perimetric edge of said lining, said shoe comprising an injection-molded sole and an internal channel made of waterproofing plastic material at said at least one seat formed in said at least one insole.

Further characteristics and advantages of the invention will become better apparent from the following detailed description of a particular but non-limitative embodiment thereof, illustrated by way of non-limitative example in the accompanying drawings, wherein:

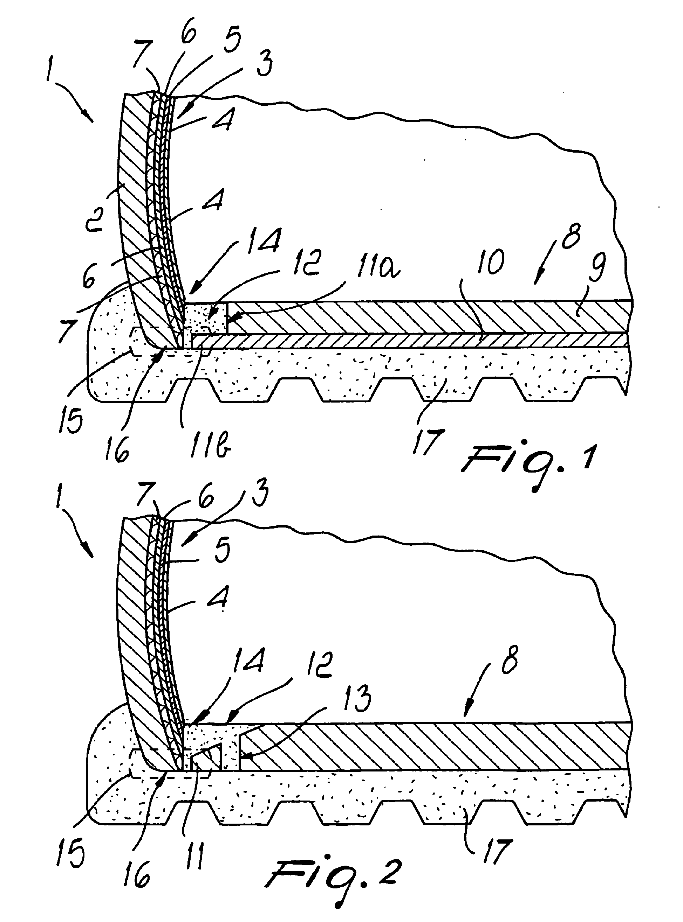

Figure 1 is a sectional partial view, taken along a transverse plane, of a shoe;
Figure 2 is a view, similar to Figure 1, of a different embodiment for the shoe;

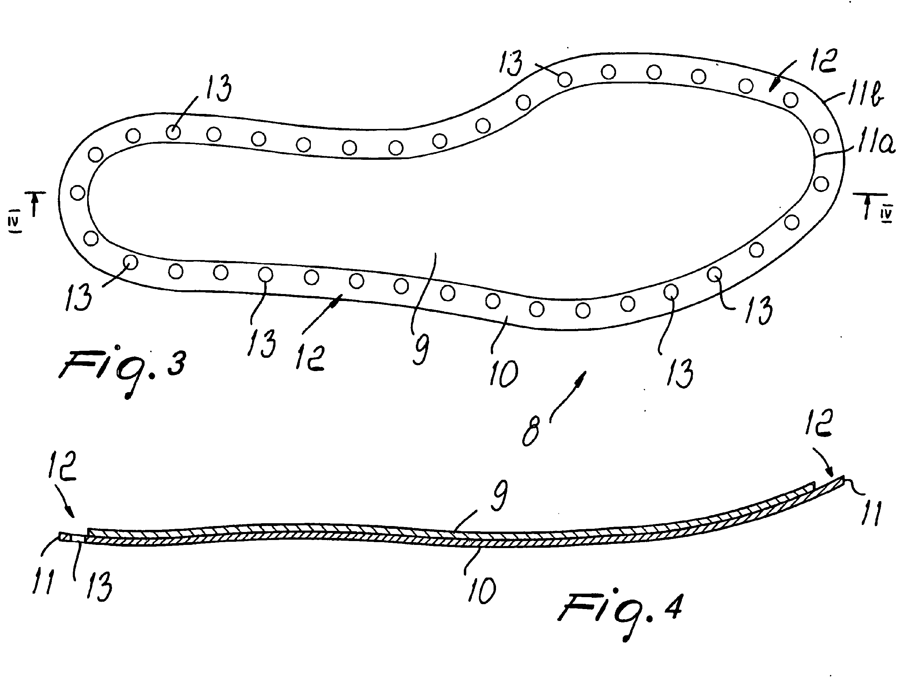

Figure 3 is a plan view of the insole;
Figure 4 is a sectional view, taken along the line IV-IV of Figure 3;
Figure 5 is a view, similar to Figure 1, of a still further embodiment for the shoe.

With reference to the figures, the reference numeral 1 designates a waterproof and breathable shoe, which comprises an upper 2, made of leather or fabric, and an inner lining 3.

Such lining is advantageously constituted by a first layer 4, constituted for example by fabric or leather, which has a first surface that makes contact with the foot of the user and a second surface that is coupled to a second protective layer 5, which is constituted by a sponge or by a non-woven fabric or by a foam.

The second layer 5 is in turn in contact with a membrane 6 made of a material that is permeable to air but not to water.

The membrane 6 is associated, on the opposite side, with a third layer 7, which is constituted by a bonded fabric or web that is to be placed in contact with the adjacent upper 2.

The shoe is further constituted by at least one insole 8, which in the particular embodiment is constituted by an inner insole 9, preferably made of leather or non-woven fabric, for example a felt made of synthetic material, or cellulose, and by an outer insole 10, which is coupled to the inner one by sewing or gluing.

The outer insole 10 is advantageously provided as non-woven fabric based on a fiber that does not absorb water, such as for example polypropylene; as an alternative, the insole 8 can be provided as a single element that is not permeable to water and is therefore made for example of plastic material.

The method for obtaining the shoes entails providing, at the insole 8, starting from its perimetric edge 11, a seat 12 that affects part of the thickness of the insole 8.

In the particular embodiments shown, and therefore if the insole 8 is constituted by an inner insole 9 and by an outer insole 10, the seat 12 is obtained by giving the inner insole 9 smaller perimetric dimensions than the outer insole 10, so as to form between them a step of chosen height and width.

This forms a perimetric edge 11a for the inner insole 9 and a separate perimetric edge 11b for the outer insole 10.

Advantageously, the width of the step, and therefore the difference in size between the perimetric edges 11a and 11b of the inner and outer insoles, is variable between approximately 3 and 7 millimeters. Moreover, the seat 12 can have a configuration other than step-shaped and therefore can be arranged along an inclined plane, as shown in Figure 2.

One or more through holes 13 are further formed advantageously at the seat 12.

In the particular solutions shown, said holes are obtained at the portion of the outer insole 10 that is not affected by the inner insole 9.

The method then entails removing by skiving a lower perimetric edge 14 of the lining 3, which is arranged adjacent to the seat 12 formed for the insole 8.

In particular, the skiving must be obtained so that the membrane 6 faces the seat 12.

The method then entails the perimetric sewing, shown schematically and designated by the reference numeral 15, of the lower end 16 of the upper 2 with the skived perimetric edge 14 of the lining 3 and with the insole 8 at the region affected by the seat 12.

In the particular embodiments shown, the stitched seam 15 affects the region of the outer insole 10 that is not affected by the overlying inner insole 9.

Moreover, as shown in Figure 2, advantageously the stitched seam 15 affects the part of the outer insole 10 that is in turn external with respect to the holes 13.

The method then entails placing the upper thus obtained on a last and the subsequent injection-molding of a sole, designated by the reference numeral 17, made of waterproofing plastic material.

Such injection-molding thus affects the holes 13 and therefore the seat 12, thus forming a channel of waterproofing plastic material at the seat 12, which mutually joins the insole and the membrane 6.

As an alternative to the presence of the holes 13, the outer insole 10 can have, at least in the region of the seat 12, a composition that allows the migration of the plastic material until the previously described condition is achieved.

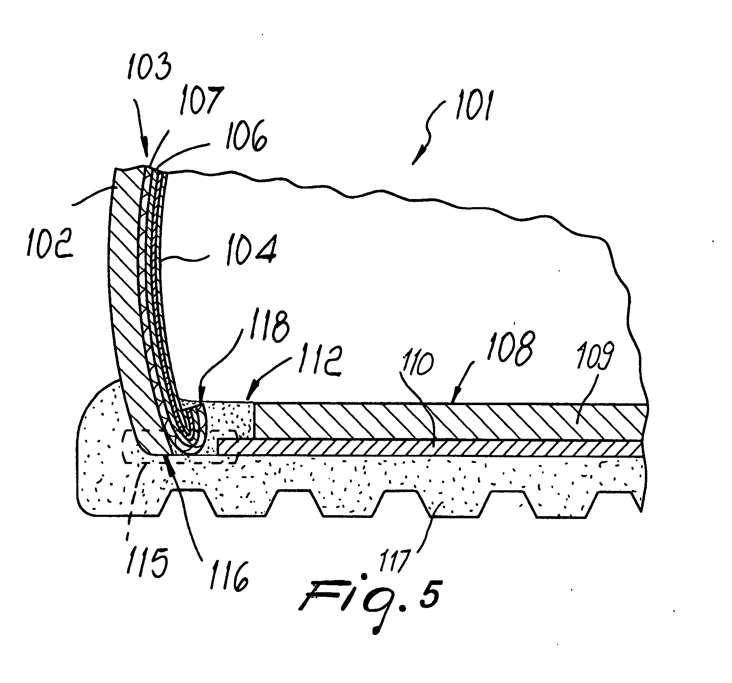

Figure 5 illustrates a different embodiment for a shoe 101, which is again composed of an insole 108 and has a lining 103 that is not skived at the seat 112.

In this condition, the lining 103 is in fact folded, once it has reached the lower end 116 of the upper 102, toward the inside of the shoe, said fold being advantageously formed for a length of 6-8 millimeters and being fixed with glue so as to allow to fix the material and prevent water absorption effects.

Advantageously, it is possible to consider the application of a sufficiently liquid adhesive at the first layer 104 in contact with the foot of the user for a width of advantageously 8-10 millimeters, said adhesive thus penetrating the textile fibers and preventing any water absorption.

If a leather lining is used in this solution, the membrane 106 coupled to the third layer 107 has an extension, with respect to the length of the leather, of approximately 7-8 millimeters in the lower part; this solution can be provided during template preparation.

In this solution also there is a perimetric stitched seam 115 that joins the lower end 116 of the upper 102 to the perimetric edge 118, which is folded toward the inside of the shoe, of the lining 103 and to the insole 108 at the region affected by the seat 112.

In another solution, the method can provide, in order to obtain a channel made of waterproofing plastic material at said at least one seat of said at least one insole, a slot at the perimetric edge of the last that is adjacent to said seat, said slot being suitable to act as a seat for the subsequently injected thermoplastic material.

In this case, said slot connects the insole to the lining or membrane.

It has thus been found that the invention has achieved the intended aim and objects, a method having been provided which allows to obtain a waterproof and breathable shoe at low costs by way of a large reduction in rej ects.

Moreover, the method allows to obtain a waterproof shoe regardless of the ability or attention that an operator must use in positioning the upper and the lining or the membrane during the various steps of the process.

By way of the method described above, the resulting shoe is not only waterproof but also free from creases at the toe.

The materials used, as well as the dimensions that constitute the individual components of the invention, may of course be more pertinent according to specific requirements.

The various means for performing certain different functions need not certainly coexist only in the illustrated embodiment but can be present per se in many embodiments, including ones that are not illustrated.

The disclosures in Italian Patent Application No. TV2003A000043 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for obtaining a waterproof and breathable shoe (1), provided with an upper made (2) of leather or fabric, with a lining (3) that comprises at least one membrane made of a material that provides permeability to air but not to water, and with at least one insole (8), said insole being constituted by an inner insole (9) and an outer insole (10), **characterized in that** it comprises, even in a different sequence, the steps of:
-- providing at least one seat (12) starting from the perimetric edge (11) of said at least one waterproofed insole, so as to affect part of its thickness;
--removing by skiving part of the lower perimetric edge (14) of said lining that is adjacent to said at least one seat of said at least one insole;
-- providing a perimetric strobel-stitched seam (15) of the lower end (16) of said upper with said lower skived perimetric edge of said lining and with said at least one outer insole (10) in a region affected by said at least one seat;
--positioning said upper thus obtained on a last;
-- injection-molding a sole (17) over said upper and forming a channel made of waterproofing plastic material at said at least one seat of said at least one insole.

2. The method of claim 1, further comprising the step of providing one or more through holes in said at least one insole at said at least one seat.

3. A waterproof and breathable shoe (1), provided with an upper (2) made of leather or fabric, with a lining (3) that comprises at least one membrane (6) made of a material adapted to provide permeability to air but not to water, and with at least one insole (8), **characterized in that** starting from the perimetric edge (11) of said at least one waterproofed insole there is, through part of its thickness, at least one seat (12) at which a perimetric strobel stitched seam (15) is applied for coupling with the lower end (16) of said upper and with a skived lower perimetric edge (14) of said lining, said shoe comprising an injection-molded sole (17) and an internal channel made of waterproofing plastic material at said at least one seat formed in said at least one insole.

4. The shoe according to claim 3, **characterized in that** said lining is composed of a first layer, constituted by fabric or leather, which has a first surface that makes contact with the foot of the user and a second surface that is coupled to a second protective layer which is constituted by a sponge or by a non-woven fabric or by a foam, said second layer being adjacent to a membrane made of a material that provides permeability to air but not to water, said membrane being associated, on the opposite side, with a third layer that is constituted by a web or bonded fabric that is to be placed in contact with said adjacent upper.

5. The shoe according to one or more of claims 3-4, **characterized in that** said at least one insole is constituted by an inner insole, made of leather or non-woven fabric or cellulose, and by an outer insole, which is joined to the preceding one by sewing or gluing.

6. The shoe according to claims 3-5, **characterized in that** said outer insole is provided as a single element that is not permeable to water and is preferably made of plastic material.

7. The shoe according to claims 3-5, **characterized in that** said outer insole is provided as non-woven fabric based on a fiber that does not absorb water, such as polypropylene.

8. The shoe according to one or more of claims 3-7, **characterized in that** at least one seat is formed at said insole, starting from its perimetric edge, and affects part of the thickness of said insole.

9. The shoe according to claims 3-8, **characterized in that** said at least one seat is obtained by giving said inner insole smaller perimetric dimensions than said outer insole, so as to form between the two a step of chosen height and width or a thickness reduction according to a chosen configuration.

10. The shoe according to claims 3 and 9, **characterized in that** the width of said step, and the difference in size between the perimetric edge of said inner and outer insoles, varies between approximately 3 and 7 millimeters.

11. The shoe according to one or more of claims 3-10, **characterized in that** one or more through holes are formed at said seat and are obtained at the portion of said outer insole that is not affected by said inner insole.

12. The shoe according to one or more of claims 3-11, **characterized in that** the lower perimetric edge of said lining that is adjacent to said seat provided for said insole is removed by skiving.

13. The shoe according to one or more of claims 3-12, **characterized in that** said skiving is provided so that said membrane faces said seat.

14. The shoe according to one or more of claims 3-13, **characterized in that** said perimetric stitched seam affects the lower end of said upper, said skived perimetric edge of said lining and said insole at least at the region affected by said seat.

15. The shoe according to claims 3-14, **characterized in that** said stitched seam affects the region of said outer insole that is not affected by said overlying inner insole.

16. The shoe according to claims 3-15, **characterized in that** said stitched seam affects the part of said outer insole that is in turn external to said holes.

17. The shoe according to claims 3-16, **characterized in that** said injection affects said holes and therefore said seat, thus forming at said seat a channel made of waterproofing plastic material, which mutually joins said insole and said membrane.

18. The shoe according to claims 3-17, **characterized in that** said outer insole has, at least in the region of said at least one seat, a composition that allows the migration of the plastic material so as to form said inner channel made of waterproofing plastic material.

19. A method for obtaining a waterproof and breathable shoe (101) provided with an upper (102) made of leather or fabric, with a lining (103) that comprises at least one membrane made of a material that is permeable to air but not to water, and with at least one insole (108), said insole being constituted by an inner insole (109) and an outer insole (110), **characterized in that** it comprises, even in a different sequence, the steps of:
-- providing at least one seat (112) starting from the perimetric edge (111) of said at least one waterproofed insole so as to affect part of its thickness;
-- folding said lining starting from the lower end (116) of said upper, toward the inside of said shoe, and fixing the material in order to prevent water absorption effects;
-- providing a perimetric strobel-stitched seam (115) of the lower end of said upper with said lining and with said at least one outer insole (110) in a region affected by said at least one seat;
-- positioning said upper thus obtained on a last;
-- injection-molding a sole (117) on said upper and forming a channel made of waterproofing plastic material at said at least one seat of said at least one insole.

20. The method according to claim 19, **characterized in that** it comprises the step of providing one or more through holes in said at least one insole at said at least one seat.

21. The method according to claim 19, **characterized in that** said lining is formed for a width of 6-8 millimeters and is fixed with adhesive so as to allow to fix the material and prevent water absorption effects.

22. The method according to claims 19 and 21, **characterized in that** said membrane comprises a first layer that is in contact with the foot of the user, a sufficiently liquid adhesive being applied to said layer for a width of advantageously 8-10 millimeters, said adhesive penetrating the textile fibers and preventing water absorption.

23. A method for obtaining a waterproof and breathable shoe (1), provided with an upper (2) made of leather or fabric, with a lining (3) that comprises at least one membrane (6) made of a material that provides permeability to air but not to water, and at least one insole (8), said insole being constituted by an inner insole (9) and an outer insole (10), **characterized in that** it comprises, even in a different sequence, the steps of:
-- providing at least one seat (12) starting from the perimetric (11) edge of said at least one waterproofed insole so as to affect part of its thickness;
-- removing by skiving part of the lower perimetric edge (14) of said lining that is adjacent to said at least one seat of said at least one insole;
-- providing a perimetric strobel-stitched seam (115) of said the lower end (116) of said upper with said skived lower perimetric edge of said lining and with said at least one inner insole (10) in a region affected by said at least one seat;
-- positioning said upper thus obtained on a last;
-- providing, at the perimetric edge of said last that is adjacent to said seat, a slot that is suitable to act as a seat for the thermoplastic material that is subsequently injected;
-- injection-molding a sole (17) on said upper and forming a channel made of waterproofing plastic material at said at least one seat of said at least one insole.

24. The method according to claim 23, **characterized in that** it comprises the step of providing one or more through holes in said at least one insole at said at least one seat.

## Patentansprüche

1. Ein Verfahren zur Herstellung eines wasserdichten und atmungsaktiven Schuhwerks (1), das mit einem aus Leder oder Stoff hergestellten Schuhoberteil (2), mit einem Futter (3), das mindestens eine Membrane umfasst, die aus einem Material hergestellt ist, das Luft-, aber keine Wasserdurchlässigkeit bereitstellt, und mit mindestens einer Brandsohle (8) bereitgestellt ist, wobei die Brandsohle aus einer inneren (9) und einer äusseren Brandsohle (10) gebildet ist, **dadurch gekennzeichnet, dass** es, sogar in einer anderen Reihenfolge, die folgenden Schritte umfasst:
-- Bereitstellen mindestens eines an der Umlaufkante (11) der mindestens einen wasserdichten Brandsohle (12) beginnenden Sitzes, um so Teil ihrer Dicke zu beeinflussen;
-- Entfernen, mittels Schälen, eines Teils der unteren Umlaufkante (14) des Futters, das an den mindestens einen Sitz der mindestens einen Brandsohle angrenzt;
-- Bereitstellen einer umlaufenden Strobel-genähten Naht (15) des unteren Endes (16) des Schuhoberteils mit der unteren geschälten Umlaufkante des Futters und mit der mindestens einen äusseren Brandsohle (10), in einem von dem mindestens einen Sitz beeinflussten Bereich;
-- Positionieren des derart erhaltenen Schuhoberteils auf einem Leisten;
-- Spritzgießen einer Sohle (17) über das Schuhoberteil und Formung eines Kanals, hergestellt aus wasserdichtem Plastikmaterial, an dem mindestens einen Sitz der mindestens einen Brandsohle.

2. Das Verfahren nach Anspruch 1, weiter den Schritt des Bereitstellens eines oder mehrerer Durchgangslöcher in der mindestens einen Brandsohle an dem mindestens einen Sitz umfassend.

3. Ein wasserdichtes und atmungsaktives Schuhwerk (1), bereitgestellt mit einem aus Leder oder Textil hergestellten Schuhoberteil (2), mit einem Futter (3), das mindestens eine Membrane umfasst, die aus einem Material hergestellt ist, das angepasst ist, Luft-, aber keine Wasserdurchlässigkeit bereitzustellen, und mit mindestens einer Brandsohle, **dadurch gekennzeichnet, dass** es angefangen von der Umlaufkante (8) der mindestens einen wasserdichten Brandsohle, durch einen Teil ihrer Dicke, mindestens einen Sitz (12) gibt, an dem eine umlaufende Strobel-genähte Naht zur Verbindung mit dem unteren Ende des Schuhoberteils und mit einer geschälten unteren Umlaufkante des Futters angebracht ist, wobei das Schuhwerk eine spritzgegossene Sohle und einen internen Kanal, hergestellt aus wasserdichtem Plastikmaterial, an dem mindestens einen in der mindestens einen Brandsohle gebildeten Sitz umfasst.

4. Das Schuhwerk gemäß Anspruch 3, **dadurch gekennzeichnet, dass** das Futter aus einer ersten aus Stoff oder Leder gebildeten Schicht zusammengesetzt ist, welche eine erste Oberfläche hat, die mit dem Fuss des Benutzers in Kontakt steht und eine zweite Oberfläche, die mit einer zweiten Schutzschicht verbunden ist, welche aus einem Schwamm oder aus einem nicht-gewebten Stoff oder aus einem Schaum besteht, wobei die zweite Schicht an eine Membrane angrenzt, die aus einem Material hergestellt ist, das Luft-, aber keine Wasserdurchlässigkeit bereitstellt, wobei die Membrane auf der entgegengesetzten Seite mit einer dritten Schicht verbunden ist, die aus einem Gewebe oder Textilverbundstoff gebildet ist, die mit dem angrenzenden Schuhoberteil in Kontakt gebracht werden soll.

5. Das Schuhwerk gemäß einem oder mehreren der Ansprüche 3-4, **dadurch gekennzeichnet, dass** die mindestens eine Brandsohle aus einer inneren Brandsohle, hergestellt aus Leder oder nicht-gewebtem Stoff oder Zellulose, und aus einer äusseren Brandsohle, die mit der vorhergehenden mittels Nähen oder Kleben verbunden ist, gebildet ist.

6. Das Schuhwerk gemäß den Ansprüchen 3-5, **dadurch gekennzeichnet, dass** die äussere Brandsohle als Einzelelement bereitgestellt ist, das von Wasser nicht durchdringbar ist und bevorzugt aus Plastikmaterial hergestellt ist.

7. Das Schuhwerk gemäß den Ansprüchen 3-5, **dadurch gekennzeichnet, dass** die äussere Brandsohle als nicht-gewebter Stoff bereitgestellt ist, der auf einer Faser basiert, die kein Wasser absorbiert, wie z.B. Polypropylen.

8. Das Schuhwerk gemäß einem oder mehreren der Ansprüche 3-7, **dadurch gekennzeichnet, dass** mindestens ein Sitz an der Brandsohle geformt ist, angefangen von ihrer Umlaufkante und Teil der Dicke der Brandsohle beeinflusst.

9. Das Schuhwerk gemäß den Ansprüchen 3-8, **dadurch gekennzeichnet, dass** der mindestens eine Sitz erreicht wird, indem man der inneren Brandsohle geringere Umfangsdimensionen als der äusseren Brandsohle gibt, um so zwischen den beiden eine Stufe von ausgewählter Höhe und Breite oder eine Dickenreduzierung gemäß einer bestimmten Konfiguration zu bilden.

10. Das Schuhwerk gemäß den Ansprüchen 3 und 9, **dadurch gekennzeichnet, dass** die Breite der Stufe und der Größenunterschied zwischen der Umfangskante der inneren und äusseren Brandsohlen ungefähr zwischen 3 und 7 Millimetern variiert.

11. Das Schuhwerk gemäß einem oder mehreren der Ansprüche 3-10, **dadurch gekennzeichnet, dass** ein oder mehrere Durchgangslöcher an dem Sitz geformt und an dem Teil der äusseren Brandsohle erhalten werden, der von der inneren Brandsohle unbeeinflusst ist.

12. Das Schuhwerk gemäß einem oder mehreren der Ansprüche 3-11, **dadurch gekennzeichnet, dass** die untere Umlaufkante des Futters, das an den für die Brandsohle bereitgestellten Sitz angrenzt, mittels Schälen entfernt ist.

13. Das Schuhwerk gemäß einem oder mehreren der Ansprüche 3-12, **dadurch gekennzeichnet, dass** das Schälen derart bereitgestellt ist, damit die Membrane dem Sitz gegenübersteht.

14. Das Schuhwerk gemäß einem oder mehreren der Ansprüche 3-13, **dadurch gekennzeichnet, dass** der umlaufend genähte Saum das untere Ende des Schuhoberteils, die geschälte Umlaufkante des Futters und die Brandsohle zumindest in dem vom Sitz beeinflussten Bereich beeinflusst.

15. Das Schuhwerk gemäß den Ansprüchen 3-14, **dadurch gekennzeichnet, dass** der genähte Saum den Bereich der äusseren Brandsohle beeinflusst, der nicht von der darüberliegenden inneren Brandsohle beeinflusst ist.

16. Das Schuhwerk gemäß den Ansprüchen 3-15, **dadurch gekennzeichnet, dass** der genähte Saum den Teil der äusseren Brandsohle beeinflusst, der wiederum aussenliegend zu den Löchern ist.

17. Das Schuhwerk gemäß den Ansprüchen 3-16, **dadurch gekennzeichnet, dass** die Anspritzung die Löcher und daher den Sitz derart beeinflusst, dass sie an dem Sitz einen Kanal aus wasserdichtem Plastikmaterial formt, der gegenseitig die Brandsohle und die Membrane verbindet.

18. Das Schuhwerk gemäß den Ansprüchen 3-17, **dadurch gekennzeichnet, dass** die äussere Brandsohle, zumindest in dem Bereich des mindestens einen Sitzes, eine Zusammenstellung aufweist, die die Wanderung des Plastikmaterials erlaubt, um so einen aus wasserdichtem Plastikmaterial hergestellten inneren Kanal zu bilden.

19. Ein Verfahren zum Herstellen eines wasserdichten und atmungsaktiven Schuhwerks (101), das mit einem aus Leder oder Stoff hergestellten Schuhoberteil (102), mit einem Futter (103), das mindestens eine Membrane umfasst, hergestellt aus einem Material, das für Luft, aber nicht für Wasser, durchlässig ist, und mit mindestens einer Brandsohle (108) bereitgestellt ist, wobei die Brandsohle aus einer inneren (109) und einer äusseren Brandsohle (110) gebildet ist, **dadurch gekennzeichnet, dass** es, sogar in anderer Reihenfolge, die folgenden Schritte umfasst:
-- Bereitstellen mindestens eines an der Umlaufkante (111) der mindestens einen wasserdichten Brandsohle beginnenden Sitzes (112), um so Teil ihrer Dicke zu beeinflussen;
-- Falten des Futters, vom unteren Ende (116) des Schuhoberteils beginnend, in Richtung der Innenseite des Schuhwerks, und Befestigen des Materials, um Wasseraufnahmeeffekte zu verhindern;
-- Bereitstellen einer umlaufenden Strobel-genähten Naht (115) des unteren Endes des Schuhoberteils mit dem Futter und mit der mindestens einen äusseren Brandsohle (110), in einem von dem mindestens einen Sitz beeinflussten Bereich;
-- Positionieren des derart erhaltenen Schuhoberteils auf einem Leisten;
-- Spritzgießen einer Sohle (117) an die Schuhoberseite und Formen eines Kanals, hergestellt aus wasserdichtem Plastikmaterial, an dem mindestens einen Sitz der mindestens einen Brandsohle.

20. Das Verfahren gemäß Anspruch 19, **dadurch gekennzeichnet, dass** es den Schritt zum Bereitstellen eines oder mehrerer Durchgangslöcher in der mindestens einen Brandsohle an dem mindestens einen Sitz umfasst.

21. Das Verfahren gemäß Anspruch 19, **dadurch gekennzeichnet, dass** das Futter auf eine Breite von 6-8 Millimetern geformt ist und mit Klebstoff befestigt ist, um so das Material zu fixieren und Wasseraufnahmeeffekte zu verhindern.

22. Das Verfahren gemäß den Ansprüchen 19 und 21, **dadurch gekennzeichnet, dass** die Membrane eine erste Schicht umfasst, die mit dem Fuss des Schuhbenutzers in Kontakt steht, wobei ein ausreichend flüssiger Klebstoff auf die Schicht in einer Breite von vorteilhaft 8-10 Millimetern aufgetragen wird, wobei der Klebstoff in die Textilfasern eindringt und eine Wasseraufnahme verhindert.

23. Ein Verfahren zum Herstellen eines wasserfesten und atmungsaktiven Schuhwerks (1), das mit einem aus Leder oder Stoff hergestellten Schuhoberteil (2), mit einem Futter (3), das mindestens eine Membrane (6) umfasst, die aus einem Material hergestellt ist, das Luft-, aber keine Wasserdurchlässigkeit bereitstellt, und mindestens einer Brandsohle (108) bereitgestellt ist, wobei die Brandsohle aus einer inneren (9) und einer äusseren Brandsohle (10) gebildet ist, **dadurch gekennzeichnet, dass** es, sogar in anderer Reihenfolge, die folgenden Schritte umfasst:
-- Bereitstellen mindestens eines Sitzes (12), der von der Umlaufkante (11) der mindestens einen wasserfesten Brandsohle beginnt, um so Teil ihrer Dicke zu beeinflussen;
-- Entfernen der unteren Umlaufkante (14) des Futters, das an den mindestens einen Sitz der mindestens einen Brandsohle angrenzt, mittels Schälen;
-- Bereitstellen einer umlaufenden Strobel-genähten Naht (15) des unteren Endes (16) des Schuhoberteils mit der geschälten unteren Umlaufkante des Futters und mit der mindestens einen äusseren Brandsohle (10), in einem von dem mindestens einen Sitz beeinflussten Bereich;
-- Positionieren des derart erhaltenen Schuhoberteils auf einem Leisten;
-- Bereitstellen einer Nut an der Umlaufkante des Leisten, der an den Sitz angrenzt, die geeignet ist als Sitz für das thermoplastische Material, das nacheinander eingespritzt wird, zu fungieren;
-- Spritzgießen einer Sohle (17) an das Schuhoberteil und Formen eines Kanals, hergestellt aus wasserdichtem Plastikmaterial, an dem mindestens einen Sitz der mindestens einen Brandsohle.

24. Das Verfahren gemäß Anspruch 23, **dadurch gekennzeichnet, dass** es den Schritt zum Bereitstellen eines oder mehrerer Durchgangslöcher in der mindestens einen Brandsohle an dem mindestens einen Sitz umfasst.

## Revendications

1. Procédé pour obtenir une chaussure (1) imperméable à l'eau et perméable à l'air, munie d'une empeigne (2) réalisée en cuir ou en tissu, d'une doublure (3) qui comprend au moins une membrane réalisée en un matériau qui prévoit la perméabilité à l'air mais non à l'eau, et d'au moins une première (8), ladite première étant constituée par une première interne (9) et une première externe (10), **caractérisé en ce qu'**il comprend, également dans le désordre, les étapes consistant à :
-- prévoir au moins un logement (12) à partir du bord périmétrique (11) de ladite au moins une première imperméabilisée à l'eau, de sorte à affecter une partie de son épaisseur;
-- enlever par biseautage une partie du bord périmétrique inférieur (14) de ladite doublure qui est adjacente audit au moins un logement de ladite au moins une première:
-- prévoir une couture Strobel (15) périmétrique de l'extrémité inférieure (16) de ladite empeigne avec ledit bord périmétrique inférieur biseauté de ladite doublure et avec ladite au moins une première externe (10) dans une région affectée par ledit au moins un logement;
-- positionner ladite empeigne ainsi obtenue sur une forme;
-- mouler par injection une semelle (17) sur ladite empeigne et former un canal réalisé en plastique imperméable à l'eau au niveau d'au moins un logement de ladite au moins une première.

2. Procédé selon la revendication 1, comprenant en outre l'étape consistant à prévoir un ou plusieurs trous traversants dans ladite au moins une première au niveau dudit au moins un logement.

3. Chaussure (1) imperméable à l'eau et perméable à l'air, munie d'une empeigne (2) réalisée en cuir ou en tissu, d'une doublure (3) qui comprend au moins une membrane (6) réalisée en un matériau prévoyant la perméabilité à l'air mais non à l'eau, et d'au moins une première (8), **caractérisée en ce qu'**en partant du bord périmétrique (11) de ladite au moins une première imperméabilisée à l'eau se trouve, sur une partie de son épaisseur, au moins un logement (12) au niveau duquel une couture Strobel (15) périmétrique est appliquée pour le couplage avec l'extrémité inférieure (16) de ladite empeigne et avec un bord périmétrique inférieur biseauté (14) de ladite doublure, ladite chaussure comprenant une semelle (17) moulée par injection et un canal interne réalisé en plastique imperméable à l'eau au niveau dudit au moins un logement formé dans ladite au moins une première.

4. Chaussure selon la revendication 3, **caractérisée en ce que** ladite doublure est composée d'une première couche, constituée en tissu ou en cuir, qui présente une première surface qui vient en contact avec le pied de l'utilisateur et une deuxième surface qui est couplée à une deuxième couche protective qui est constituée par une éponge ou par un tissu non-tissé ou par une mousse, ladite deuxième couche étant adjacente à une membrane faite en un matériau qui prévoit la perméabilité à l'air mais non à l'eau, ladite membrane étant associée, sur le coté opposé, à une troisième couche qui est constituée par un tissu ou un tissu lié qui doit être placé en contact avec ladite empeigne adjacente.

5. Chaussure selon une ou plusieurs des revendications 3 à 4, **caractérisée en ce que** ladite au moins une première est constituée par une première interne, réalisée en cuir ou en tissu non tissé ou en cellulose, et par une première externe qui est jointe à la précédente par couture ou collage.

6. Chaussure selon les revendications 3 à 5, **caractérisée en ce que** ladite première externe est prévue comme un unique élément qui n'est pas perméable à l'eau et qui est de préférence réalisé en plastique.

7. Chaussure selon les revendications 3 à 5, **caractérisée en ce que** ladite première externe est prévue comme un tissu non tissé à base d'une fibre qui ne doit pas absorber l'eau, tel que le polypropylène.

8. Chaussure selon une ou plusieurs des revendications 3 à 7, **caractérisée en ce qu'**au moins un logement est formé au niveau de ladite première, en partant de son bord périmétrique, et affecte une partie de l'épaisseur de ladite première.

9. Chaussure selon les revendications 3 à 8, **caractérisée en ce que** ledit au moins un siège est obtenu en attribuant à ladite première interne des dimensions périmétriques plus petites que ladite première externe, de façon à former entre les deux un palier de hauteur et largeur choisies ou une réduction de l'épaisseur selon une configuration choisie.

10. Chaussure selon les revendications 3 et 9, **caractérisée en ce que** la largeur dudit palier, et les différences de taille entre le bord périmétrique desdites premières interne et externe, varie approximativement entre 3 et 7 millimètres.

11. Chaussure selon une ou plusieurs des revendications 3 à 10, **caractérisée en ce qu'**une ou plusieurs trous traversants sont formés au niveau dudit logement et sont obtenus au niveau de la partie de ladite première externe qui n'est pas affectée par ladite première interne.

12. Chaussure selon une ou plusieurs des revendications 3 à 11, **caractérisée en ce que** le bord périmétrique inférieur de ladite doublure qui est adjacente audit logement prévu pour ladite première est enlevé par biseautage.

13. Chaussure selon une ou plusieurs des revendications 3 à 12, **caractérisée en ce que** ledit biseautage est prévu de sorte que ladite membrane fait face audit logement.

14. Chaussure selon une ou plusieurs des revendications 3 à 13, **caractérisée en ce que** ladite couture périmétrique affecte l'extrémité inférieure de ladite empeigne, ledit bord périmétrique biseauté de ladite doublure et ladite première au moins au niveau de la région affectée par ledit logement.

15. Chaussure selon les revendications 3 à 14, **caractérisée en ce que** ladite couture affecte la région de ladite première externe qui n'est pas affectée par ladite première interne sur-jacente.

16. Chaussure selon les revendications 3 à 15, **caractérisée en ce que** ladite couture affecte la partie de ladite première externe qui est à son tour externe auxdits trous.

17. Chaussure selon les revendications 3 à 16, **caractérisée en ce que** ladite injection affecte lesdits trous et donc ledit logement, formant ainsi au niveau dudit logement un canal réalisé en plastique imperméable à l'eau qui joint mutuellement ladite première et ladite membrane.

18. Chaussure selon les revendications 3 à 17, **caractérisée en ce que** ladite première externe présente, au moins dans la région dudit au moins un logement, une composition qui permet la migration du plastique afin de former ledit canal interne réalisé en plastique imperméable à l'eau.

19. Procédé pour obtenir une chaussure (101) imperméable à l'eau et perméable à l'air, munie d'une empeigne (102) réalisée en cuir ou en tissu, d'une doublure (103) qui comprend au moins une membrane réalisée en un matériau qui est perméable à l'air mais non à l'eau, et d'au moins une première (108), ladite première étant constituée par une première interne (109) et une première externe (110), **caractérisé en ce qu'**il comprend, également dans le désordre, les étapes consistant à :
-- prévoir au moins un logement (112) à partir du bord périmétrique (111) de ladite au moins une première imperméabilisée à l'eau, afin d'affecter une partie de son épaisseur;
-- plier ladite doublure en partant de l'extrémité inférieure (116) de ladite empeigne, vers l'intérieur de ladite chaussure, et fixer le matériau afin de prévenir des effets d'absorption d'eau;
-- prévoir une couture Strobel (115) périmétrique de l'extrémité inférieure de ladite empeigne avec ladite doublure et avec ladite au moins une première externe (110) dans une région affectée par ledit au moins un logement;
-- positionner ladite empeigne ainsi obtenue sur une forme;
-- mouler par injection une semelle (117) sur ladite empeigne et former un canal réalisé en plastique imperméable à l'eau au niveau d'au moins un logement de ladite au moins une première.

20. Procédé selon la revendication 19, **caractérisé en ce qu'**il comprend l'étape consistant à prévoir un ou plusieurs trous traversants dans ladite au moins une première au niveau dudit au moins un logement.

21. Procédé selon la revendication 19, **caractérisé en ce que** ladite doublure est formée sur une largeur de 6 à 8 millimètres et est fixée avec un adhésif afin de permettre de fixer le matériau et de prévenir des effets d'absorption d'eau.

22. Procédé selon les revendications 19 et 21, **caractérisé en ce que** ladite membrane comprend une première couche qui est en contact avec le pied de l'utilisateur, un adhésif suffisamment liquide étant appliqué à ladite couche sur une largeur avantageusement comprise entre 8 et 10 millimètres, ledit adhésif pénétrant les fibres textiles et empêchant l'absorption d'eau.

23. Procédé pour obtenir une chaussure (1) imperméable à l'eau et perméable à l'air, munie d'une empeigne (2) réalisée en cuir ou en tissu, d'une doublure (3) qui comprend au moins une membrane (6) réalisée en un matériau qui prévoit la perméabilité à l'air mais non à l'eau, et d'au moins une première (8), ladite première étant constituée par une première interne (9) et une première externe (10), **caractérisé en ce qu'**il comprend, également dans le désordre, les étapes consistant à :
-- prévoir au moins un logement (12) à partir du bord périmétrique (11) de ladite au moins une première imperméabilisée à l'eau afin d'affecter une partie de son épaisseur;
-- enlever par biseautage une partie du bord périmétrique inférieur (14) de ladite doublure qui est adjacente audit au moins un logement de ladite au moins une première:
-- prévoir une couture Strobel (15) périmétrique de l'extrémité inférieure (16) de ladite empeigne avec ledit bord périmétrique inférieur biseauté de ladite doublure et avec ladite au moins une première externe (10) dans une région affectée par ledit au moins un logement;
-- positionner ladite empeigne ainsi obtenue sur une forme;
-- prévoir, au niveau du bord périmétrique de ladite forme qui est adjacente audit logement, une fente qui est appropriée à agir comme un logement pour le matériau thermoplastique qui est successivement injecté;
-- mouler par injection une semelle (17) sur ladite empeigne et former un canal réalisé en plastique imperméable à l'eau au niveau dudit au moins un logement de ladite au moins une première.

24. Procédé selon la revendication 23, comprenant en outre l'étape consistant à prévoir un ou plusieurs trous traversants dans ladite au moins une première au niveau dudit au moins un logement.
